# EUROPÄISCHE PATENTSCHRIFT

(11) **EP 1 882 863 B1**
(45) Veröffentlichungstag und Bekanntmachung des Hinweises auf die Patenterteilung: **22.09.2010**
(21) Anmeldenummer: 06015824.3
(22) Anmeldetag: 28.07.2006
(51) Int. Cl.: F16D 13/68

(54) **Lamellenträger einer Reibkupplung**
Disc carrier for friction clutch
Porte-disques d'un embrayage à friction

(43) Veröffentlichungstag der Anmeldung: 30.01.2008
(73) Patentinhaber: Hoerbiger Antriebstechnik GmbH, 86956 Schongau (DE)
(72) Erfinder: Sahyoun, Ahmed, 82363 Weilheim (DE); Nickel, Falk, 86925 Fuchstal (DE); Ruprecht, Georg, 87640 Biessenhofen (DE)
(74) Vertreter: Kitzhofer, Thomas

(56) Entgegenhaltungen:
- DE-A1- 19 928 513
- JP-A- 8 049 728
- US-A- 2 857 992
- US-A- 4 846 326
- US-A- 5 996 757
- US-A1- 2002 108 833
- US-A1- 2006 006 039

## Beschreibung

Die Erfindung betrifft einen Lamellenträger für eine Reibungskupplung gemäß dem Oberbegriff des Anspruchs 1 sowie eine Reibungskupplung mit einem derartigen Lamellenträger.

Die fortschreitende Diversifizierung der Modellpaletten von Fahrzeugherstellern auf dem weltweiten Fahrzeugmarkt führt zunehmend zu kleineren Stückzahlen einzelner Modelle. Hinzu kommen kürzere Modell-Lebenszyklen durch regelmäßige Modellüberarbeitungen. Für die Baugruppen im Antriebsstrang von Fahrzeugen (Automobile und/oder Motorräder) bedeutet dies häufige Designänderungen, da zunehmend größere Drehmomente übertragen oder Gewichte reduziert werden müssen.

Im Falle von Reibungskupplungen im Antriebsstrang von Fahrzeugen sind die Gehäuse der auf dem Markt bekannten Kupplungssysteme nach dem Stand der Technik z.B. durch Stahlumformprozesse, durch Gießprozesse oder durch Leichtmetall-Druck-Gießprozesse hergestellt. Diese Verfahren erfordern kosten- und zeitintensive Werkzeuge zur Formgebung. Im Falle einer Modellüberarbeitung fallen bei Designänderungen, wie z.B. kleinere oder größere Durchmesser oder kleinere und größere Baulängen, hohe Werkzeugkosten an.

Ein Beispiel einer Mehrscheibenkupplung ist aus der DE 199 28 513 A1 bekannt, die ein einteiliges Gehäuseteil zur Aufnahme von Anpressscheiben aufweist.

Aus der gattungsgemässen US 4 846 326 A ist ein Lamellenträger bekannt, bei dem Stege als separate Teile an die Grundplatte geschraubt sind, indem sie sich durch Öffnungen der Halteplatte erstrecken. Zum Montieren wird nach dem Einsetzen der Reiblamellen der Lamellenträger durch Anschrauben der Halteplatte geschlossen.

Es ist daher Aufgabe der vorliegenden Erfindung, einen Lamellenträger für eine Reibungskupplung zu schaffen, der ein flexibles Design ermöglicht, das gleichzeitig niedrige Werkzeugkosten mit sich bringt, eine schnelle Verfügbarkeit gewährleistet und im Einzelteilpreis konkurrenzfähig zu bekannten Lamellenträgern ist.

Die Lösung dieser Aufgabe erfolgt durch einen Lamellenträger gemäß Anspruch 1 bzw. eine Reibungskupplung gemäß Anspruch 12.

Vorteilhafte Weiterbildungen ergeben sich aus den abhängigen Unteransprüchen.

Erfindungsgemäß wird ein Lamellenträger mit einem modularen Aufbau in Form einer aus flexibel einsetzbaren Einzelteilen montierten Baugruppe geschaffen. Die Einzelteile lassen sich in verschiedenen Kombinationen zu vielfältig einsetzbaren Lamellenträgern montieren. Die Einzelteile sind für Prototypen und Kleinstserien mit geeigneten Verfahren, z.B. Laserschneiden, schnell und kostengünstig herstellbar und damit verfügbar. Für größere Stückzahlen kann ohne Designänderung auf entsprechend günstige Verfahren gewechselt werden, wie z.B. Stanzen. Durch die Mehrfachnutzung der Einzelteile zum Aufbau des Lamellenträgers werden niedrige Produktionskosten erzielt.

Ein weiterer Vorteil der Erfindung gegenüber bekannten Lösungen ist die Möglichkeit, Zusatzfunktionen zu integrieren, wie z.B. Drehschwingungsdämpfer bei Kupplungen für Motorräder. Herstellkosten und Bauraum werden auf diesem Weg durch den Entfall von separaten Bauteilen, die diese Funktion im konventionellen Aufbau übernehmen, gesenkt. Die erfindungsgemäße Ausführung ermöglicht den Einsatz von Werkstoffen, die eine höhere Flächenpressung der Lamellen zulassen. Auf diesem Weg kann die Dicke der Lamellen reduziert und dadurch der Bauraumbedarf gesenkt werden.

Das Design-Konzept der Reibungskupplung gemäß Anspruch 12 ist ideal für den Einsatz in Motorrädern, aber grundsätzlich nicht auf bestimmte Einsatzbereiche beschränkt, sondern kann auch in jedweder Art von Automobilen (wie z.B. auch Traktoren, Landmaschinen, Baumaschinen) eingesetzt werden. Ferner ist es erfindungsgemäß möglich, sowohl trockene wie auch nasse Lamellenkupplungen zu schaffen.

Zusammenfassend ergeben sich erfindungsgemäß gegenüber bekannten Lösungen folgende Vorteile:
- große Flexibilität beim Design von Varianten des Lamellenträgers;
- geringe Werkzeugkosten für die Herstellung des Lamellenträgers;
- Kosteneinsparung durch Mehrfachverwendung eines Bauteils in der gleichen oder in verschiedenen Kupplungen;
- Kosteneinsparung durch Reduzierung der Teileanzahl durch Entfallen von Bauteilen;
- deutliche Verkleinerung des axialen Bauraums;
- niedrigeres Gewicht der Kupplung im Vergleich zu bekannten Kupplungen;
- niedrigeres Massenträgheitsmoment im Vergleich zu bekannten Kupplungen;
- höhere Berstdrehzahl;
- schnellere Prototyp-Verfügbarkeit durch Herstellprozesse mit geringem Werkzeugaufwand;
- bessere Kühlung und Schmierung der Reibflächen durch mehr Freiraum zur Gewährleistung des Ölflusses; und
- geringeres Schleppmoment durch verbesserten Ölabfluss.

Die Unteransprüche haben vorteilhafte Weiterbildungen der Erfindung zum Inhalt.

Weitere Einzelheiten, Vorteile und Merkmale der vorliegenden Erfindung ergeben sich aus nachfolgender Beschreibung von Ausführungsbeispielen anhand der Zeichnung. Es zeigt:
- Fig. 1: eine schematisch auseinandergezogene perspektivische Darstellung einer erfindungsgemäßen Baugruppe zum Aufbau eines erfindungsgemäßen Lamellenträgers;
- Fig. 2: eine perspektivische Darstellung des montierten Lamellenträgers; und
- Fig. 3: eine perspektivische, teilweise geschnittene Darstellung einer erfindungsgemäßen Reibungskupplung.

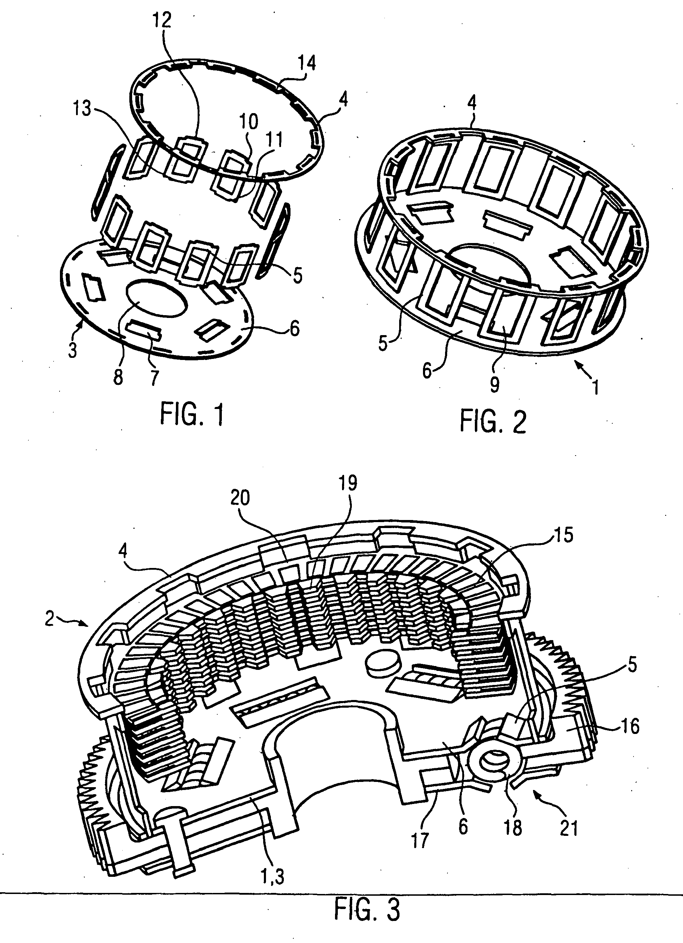

Aus einer Zusammenschau der Fig. 1 und 2 ergibt sich der Aufbau eines erfindungsgemäßen Lamellenträgers 1 und seiner modular aufgebauten Baugruppe 3, die in Fig. 1 in auseinandergezogener Darstellung verdeutlicht ist. Gemäß Fig. 1 weist die Baugruppe 3 im Beispielsfalle einen kreisrunden Haltering 4 und eine Grundplatte 6 auf. Wie Fig. 1 verdeutlicht, ist zwischen den Bauteilen 4 und 6 im Beispielsfalle eine Mehrzahl von Stegen angeordnet, die alle gleich aufgebaut sind und von denen in Fig. 1 zwei Stege mit der Bezugsziffer 5 gekennzeichnet sind. Im Beispielsfalle werden zwölf Stege verwendet, die jeweils, wie dies Fig. 1 im Einzelnen verdeutlicht, rahmenartig und rechteckförmig mit einer rechteckigen Mittelausnehmung 9 aufgebaut sind.

An den Schmalseiten 10 und 11 der jeweiligen Stege 5 sind Laschen 12 und 13 angeordnet, wobei die Stege 5 bei der dargestellten Ausführungsform mit ihren Laschen ein planes, ebenes Teil bilden. Diese Laschen 12 und 13 dienen zur Befestigung der Stege am Haltering 4 bzw. der Grundplatte 6.

Der Haltering 4 ist beispielhaft ausgebildet und weist eine Mehrzahl von nach innen weisenden Ansätzen 14 auf. Wie Fig. 1 verdeutlicht, weist der Haltering 4 bei der dargestellten Ausführungsform zwölf derartige Ansätze 14 auf, deren Zahl mit anderen Worten der Zahl der Stege 5 entspricht, die an den Ansätzen 14 befestigt werden.

Fig. 1 verdeutlicht schließlich beispielhaft den kreisförmigen Aufbau der Grundplatte 6, die mit einer mittigen kreisförmigen Ausnehmung 8 und mit insgesamt sechs rechteckförmigen Ausnehmungen 7 versehen ist, die zwischen der kreisförmigen Ausnehmung 8 und dem Außenumfang der Grundplatte 6 beispielhaft in gleichen Winkelabständen zueinander verteilt angeordnet sind. Diese rechteckförmigen Ausnehmungen 7 sind zur Aufnahme von Federn eines Drehschwingungsdämpfers vorgesehen, was nachfolgend anhand der Fig. 3 näher erläutert werden wird.

Fig. 2 verdeutlicht den Aufbau des aus der Baugruppe 3 zusammengesetzten erfindungsgemäßen Lamellenträgers 1. Wie zuvor erläutert, weist dieser im Beispielsfalle zwölf Stege 5 auf, es ist jedoch auch möglich, eine andere Anzahl von Stegen 5 je nach Einsatzfall vorzusehen.

Die Fügestellen zwischen den Einzelteilen 4, 5, 6 können zur Erzielung der notwendigen Steifigkeit und Festigkeit des Lamellenträgers 1 z.B. durch Umformprozesse, thermische Fügeprozesse, Klebeverbindungen oder Pressverbindungen hergestellt werden.

In Fig. 3 ist die erfindungsgemäße Reibungskupplung 2 dargestellt, die insbesondere für Automobile und oder Motorräder verwendet werden kann.

Die Reibungskupplung 2 ist bei der dargestellten Ausführungsform mit einem Drehschwingungsdämpfer 21 versehen, der eine Mehrzahl von Federn aufweist, von denen in Fig. 1 eine Feder mit der Bezugsziffer 18 gekennzeichnet ist.

Ferner zeigt Fig. 3 die Anordnung von Reiblamellen und Gegenlamellen 19 im Lamellenträger 1, von denen eine Reiblamelle mit der Bezugsziffer 15 und der Belagträger mit der Bezugsziffer 20 gekennzeichnet ist.

Im in Fig. 3 verdeutlichten Zusammenbauzustand der Reibungskupplung 2 kann die Grundplatte 6 zusätzlich als Gegenlager 17 für die Federn 18 des integrierten Drehschwingungsdämpfers 21 dienen.

Ferner bedarf es durch geeignete Werkstoffwahl der Grundplatte 6 keiner speziellen Verschleißschutzmaßnahme zwischen den Federn 18 und der Grundplatte 6, wie dies bei herkömmlichen Kupplungen, z.B. in Motorrädern, erforderlich ist.

Dies gilt auch für den Kontaktbereich zwischen Grundplatte 6 und einem Primärrad 16, das in Fig. 3 ebenfalls dargestellt ist, was bei herkömmlichen Kupplungen, z.B. in Motorrädern, bekanntermaßen mittels eines zusätzlichen Bauteils für den Verschleißschutz ausgeführt werden muss.

Durch geeignete Werkstoffwahl der Stege 5 sind höhere Flächenpressungen zwischen den Stegen 5 und den Reiblamellen 15 möglich, wodurch gegenüber z.B. Kupplungen in Motorrädern das Trägermaterial 20 des Reibbelages der Reiblamellen 15 deutlich dünner ausgeführt und somit axialer Bauraum wesentlich eingespart werden kann.

Zur Ergänzung der schriftlichen Offenbarung wird hiermit explizit auf die zeichnerische Darstellung gemäß den Fig. 1 bis 3 verwiesen.

### Bezugszeichenliste

- 1: Lamellenträger
- 2: Reibungskupplung
- 3: Baugruppe
- 4, 5, 6: Einzelteile (Haltering 4, Steg 5, Grundplatte 6)
- 7, 8: Durchbrechungen bzw. Ausnehmungen
- 9: Mittige Ausnehmung
- 10, 11: Schmalseiten
- 12, 13: Laschen
- 14: Ansätze
- 15: Reiblamelle
- 16: Primärrad
- 17: Gegenlager
- 18: Federn
- 19: Gegenlamelle
- 20: Träger Reibbelag
- 21: Drehschwingungsdämpfer

## Patentansprüche

1. Lamellenträger (1) für eine Reibungskupplung (2) mit einer modular aufgebauten Baugruppe (3) aus miteinander verbindbaren Einzelteilen (4, 5, 6), die einen Haltering (4), eine Mehrzahl von Stegen (5) und eine Grundplatte (6) umfassen, **dadurch gekennzeichnet, dass** der Haltering (4) eine Mehrzahl von radial nach innen weisenden Ansätzen (14) aufweist, wobei die Stege (5) an den radial nach innen weisenden Ansätzen (14) mit dem Haltering (4) verbunden sind.

2. Lamellenträger nach Anspruch 1, **dadurch gekennzeichnet, dass** die Grundplatte (6) kreisförmig ist.

3. Lamellenträger nach einem der Ansprüche 1 bis 2, **dadurch gekennzeichnet, dass** die Grundplatte (6) eine Mehrzahl von Durchbrechungen (7, 8) aufweist.

4. Lamellenträger nach einem der Ansprüche 1 bis 3, **dadurch gekennzeichnet, dass** die Stege (5) nach Art eines rechteckförmigen Rahmens mit mittiger Ausnehmung (9) ausgebildet sind.

5. Lamellenträger nach einem der Ansprüche 1 bis 4, **dadurch gekennzeichnet, dass** die Stege (5) an ihren Schmalseiten (10, 11) Laschen (12, 13) aufweisen.

6. Lamellenträger nach einem der vorhergehenden Ansprüche, **dadurch gekennzeichnet, dass** jeder Steg zwei Laschen aufweist, wobei die Stege über eine jeweils erste Lasche formschlüssig mit dem Haltering und über eine zweite Lasche formschlüssig mit der Grundplatte verbunden sind.

7. Lamellenträger nach einem der vorhergehenden Ansprüche, **dadurch gekennzeichnet, dass** jeder Steg zwei Laschen zur Befestigung des Stegs am Haltering bzw. der Grundplatte aufweist, wobei der Steg mit den Laschen ein planes ebenes Teil bildet.

8. Lamellenträger nach Anspruch 5 oder 6, **dadurch gekennzeichnet, dass** die Laschen (12, 13) an den Schmalseiten (10, 11) abgewinkelt sind.

9. Lamellenträger nach einem der vorhergehenden Ansprüche, **dadurch gekennzeichnet, dass** der Haltering (3) kreisringförmig oder polygonförmig ausgebildet ist.

10. Lamellenträger nach einem der vorhergehenden Ansprüche, **dadurch gekennzeichnet, dass** die Zahl der Ansätze (14) der Zahl der anzubringenden Stege (5) entspricht.

11. Lamellenträger nach einem der vorhergehenden Ansprüche, **dadurch gekennzeichnet, dass** die Einzelteile (4, 5, 6) durch Umformprozesse, Pressverbindungen, Klebeverbindungen oder thermisches Fügen miteinander verbunden sind.

12. Reibungskupplung (2), insbesondere für Automobile und/oder Motorräder, mit einem Drehschwingungsdämpfer (21) und einem Lamellenträger (1) gemäß einem der vorhergehenden Ansprüche.

## Claims

1. A disc carrier (1) for a friction clutch (2), comprising a modularly structured assembly (3) of individual parts (4, 5, 6) that are adapted to be connected with each other and include a holding ring (4), a plurality of webs (5) and a base plate (6), **characterized in that** the holding ring (4) includes a plurality of radially inwardly facing lugs (14), the webs (5) being connected to the holding ring (4) at the radially inwardly facing lugs (14).

2. The disc carrier according to claim 1, **characterized in that** the base plate (6) is circular.

3. The disc carrier according to any of claims 1 to 2, **characterized in that** the base plate (6) has a plurality of openings (7, 8).

4. The disc carrier according to any of claims 1 to 3, **characterized in that** the webs (5) are formed in the nature of a rectangular frame having a central recess (9).

5. The disc carrier according to any of claims 1 to 4, **characterized in that** the webs (5) include tabs (12, 13) at their narrow sides (10, 11).

6. The disc carrier according to any of the preceding claims, **characterized in that** each web includes two tabs, the webs being connected with the holding ring with an interlocking fit by means of respective first tabs and with the base plate with an interlocking fit by means of second tabs.

7. The disc carrier according to any of the preceding claims, **characterized in that** each web includes two tabs for fastening the web to the holding ring and to the base plate, respectively, the web with the tabs forming a flat, level part.

8. The disc carrier according to claim 5 or 6, **characterized in that** the tabs (12, 13) are angled at the narrow sides (10, 11).

9. The disc carrier according to any of the preceding claims, **characterized in that** the holding ring (3) is formed to have an annular or polygonal shape.

10. The disc carrier according to any of the preceding claims, **characterized in that** the number of lugs (14) corresponds to the number of webs (5) to be attached.

11. The disc carrier according to any of the preceding claims, **characterized in that** the individual parts (4, 5, 6) are connected with each other by reshaping processes, press-fit connections, adhesive joints or thermal joining.

12. A friction clutch (2), in particular for an automobile and/or a motorcycle, comprising a torsional vibration damper (21) and a disc carrier (1) according to any of the preceding claims.

## Revendications

1. Support de disques (1) pour un embrayage à friction (2), comportant un ensemble (3) à structure modulaire composé de plusieurs pièces individuelles (4, 5, 6) aptes à être reliées les unes aux autres et comprenant un anneau de retenue (4), une pluralité de barrettes (5) et une plaque de base (6), **caractérisé en ce que** l'anneau de retenue (4) présente une pluralité de saillies (14) dirigées radialement vers l'intérieur, les barrettes (5) étant reliées à l'anneau de retenue (4) sur les saillies (14) dirigées radialement vers l'intérieur.

2. Support de disques selon la revendication 1, **caractérisé en ce que** la plaque de base (6) est circulaire.

3. Support de disques selon l'une des revendications 1 à 2, **caractérisé en ce que** la plaque de base (6) présente une pluralité d'ouvertures (7, 8).

4. Support de disques selon l'une des revendications 1 à 3, **caractérisé en ce que** les barrettes (5) sont réalisées sous forme de cadre rectangulaire avec un creux (9) central.

5. Support de disques selon l'une des revendications 1 à 4, **caractérisé en ce que** les barrettes (5) présentent des languettes (12, 13) sur leurs petits côtés (10, 11).

6. Support de disques selon l'une des revendications précédentes, **caractérisé en ce que** chaque barrette présente deux languettes, les barrettes étant reliées par coopération de formes à l'anneau de retenue au moyen d'une première languette respective et étant reliées par coopération de formes à la plaque de base au moyen d'une deuxième languette respective.

7. Support de disques selon l'une des revendications précédentes, **caractérisé en ce que** chaque barrette présente deux languettes pour la fixation de la barrette à l'anneau de retenue ou à la plaque de base, respectivement, la barrette formant conjointement avec les languettes une pièce plate et plane.

8. Support de disques selon la revendication 5 ou 6, **caractérisé en ce que** les languettes (12, 13) sont coudées sur les petits côtés (10, 11).

9. Support de disques selon l'une des revendications précédentes, **caractérisé en ce que** l'anneau de retenue (3) est réalisé sous forme d'anneau de cercle ou de polygone.

10. Support de disques selon l'une des revendications précédentes, **caractérisé en ce que** le nombre de saillies (14) correspond au nombre de barrettes (5) à fixer.

11. Support de disques selon l'une des revendications précédentes, **caractérisé en ce que** les pièces individuelles (4, 5, 6) sont reliées les unes aux autres par des procédés de mise en forme, des assemblages pressés, des assemblages collés ou par assemblage thermique.

12. Embrayage à friction (2), en particulier pour automobiles et/ou motocyclettes, présentant un amortisseur de vibrations torsionnelles (21) et un support de disques (1) selon l'une des revendications précédentes.
